# EUROPEAN PATENT SPECIFICATION

(11) **EP 3 961 974 B1**
(45) Date of publication and mention of the grant of the patent: **24.05.2023**
(21) Application number: 21178959.9
(22) Date of filing: 11.06.2021
(51) Int. Cl.: H04L 9/32, H04L 9/08, H04L 9/06, G06Q 20/38, H04L 9/00

(54) **BLOCK CONTENT EDITING METHODS AND APPARATUSES**
VERFAHREN UND VORRICHTUNGEN ZUM EDITIEREN VON BLOCKINHALT
PROCÉDÉ ET APPAREILS D'ÉDITION DE CONTENUS DE BLOCS

(30) Priority: 28.08.2020 CN 202010889932
(43) Date of publication of application: 02.03.2022
(73) Proprietor: Alipay (Hangzhou) Information Technology Co., Ltd., Hangzhou, Zhejiang 310000 (CN)
(72) Inventor: WEI, Changzheng, Hangzhou, Zhejiang, 310000 (CN); SONG, Xuyang, Hangzhou Zhejiang, 310000 (CN); LIN, Yuqi, Hangzhou Zhejiang, 310000 (CN)
(74) Representative: Goddar, Heinz J.

(56) References cited:
- WO-A1-2020/108138
- US-A1- 2018 278 596
- ATENIESE GIUSEPPE ET AL: "Redactable Blockchain - or - Rewriting History in Bitcoin and Friends", 2017 IEEE EUROPEAN SYMPOSIUM ON SECURITY AND PRIVACY (EUROS&P), IEEE, 26 April 2017 (2017-04-26), pages 111-126, XP033113282, DOI: 10.1109/EUROSP.2017.37 [retrieved on 2017-06-28]

## Description

### TECHNICAL FIELD

One or more embodiments of the present specification relate to the field of blockchain technologies, and in particular, to block content editing methods and apparatuses.

### BACKGROUND

Blockchain technologies (also referred to as distributed ledger technologies) are decentralized distributed database technologies, characterized by de-centrality, openness and transparency, tamper-resistance, trustiness, etc., and are applicable to many application scenarios with high demands on data reliability.

US 2018/278596 A1 refers to rewriting blockchains in a non-tamper-evident or tamper-evident operation using a key secret held in portions by multiple individually untrusted parties. The blockchains may include a series of blocks secured by integrity codes that may prevent non-tamper-evident rewrites by non-trusted parties that are not in possession of the key secret or individually-untrusted parties in possession of only a portion of the key secret. In some cases, multiple individually-untrusted parties may combine their portions into the key secret. As a group, the multiple individually-untrusted parties may perform non-tamper-evident operation with respect to at least one integrity code within the blockchain.

WO 2020/108138 A1 an approach for implementing privacy protection in a block chain, wherein a client terminal encrypts a transaction comprising a smart contract, and sends the encrypted transaction to a first blockchain node, the code of the smart contract comprising a contract state indicated by a privacy identifier. The first blockchain node decrypts the code of the smart contract in the transaction, executes the code of the smart contract in a trusted execution environment, and uses a key for encryption when writing the contract state indicated by the privacy identifier to a database.

Anteniese Giuseppe et al.: "Redactable Blockchain - or - Rewriting History in Bitcoin and Friends", 2017 IEEE EUROPEAN SYMPOSIUM ON SECURITY AND PRIVACY (EUROS&P), discloses a framework that makes it possible to re-write or compress the content of any number of blocks in decentralized services exploiting the blockchain technology. The approach leverages so-called chameleon hash functions, which allow determining hash collisions efficiently, given a secret trapdoor information. A proof-of-concept implementation of a redactable blockchain is described, building on top of Nakamoto's Bitcoin core.

### SUMMARY

The invention is defined by a block content editing method, a block content editing apparatus, a blockchain node, and a computer-readable storage medium according to the independent claims. Preferred embodiments are defined in the dependent claims.

In view of this, one or more embodiments of the present specification provide block content editing methods and apparatuses.

To achieve the objectives, one or more embodiments of the present specification provide the following technical solutions:

According to a first aspect of the one or more embodiments of the present specification, a block content editing method is provided, including the following: a blockchain node *Bi* receives a block editing transaction, which is used to edit original block content *m* of a block *Qi* to target block content *m',* wherein a parent hash corresponding to the block *Qi* is recorded in a block header of a block *Qi*+1*,* the parent hash is generated through calculation by using original block content *m,* a public key *H*, and an original random number r, the public key *H* is generated through calculation by using node public keys *h1* to *hn* respectively corresponding to blockchain nodes *B1* to *Bn,* and *i* ∈[1, *n*] and *i* is a positive integer; the blockchain node *Bi* executes a smart contract that generates a random number when determining that a consensus on the block editing transaction succeeds, wherein the smart contract is used to execute secure multi-party computing related to node private keys *x1* to *xn* respectively corresponding to the blockchain nodes *B1* to *Bn* to generate a private key *X;* and determine corresponding target random number *r'* based on the original block content *m,* the target block content *m*'*,* the original random number *r*, and the private key *X*, wherein a hash value generated through calculation by using the target block content *m*'*,* the public key *H*, and the target random number *r'* is the same as the parent hash; and the blockchain node *Bi* updates the original block content *m* to the target block content *m*' and the original random number *r* to the target random number *r'.*

According to a second aspect of the one or more embodiments of the present specification, a block content editing apparatus is provided. The block content editing apparatus can include: a receiving unit, configured to enable a blockchain node *Bi* to receive a block editing transaction, which is used to edit original block content *m* of a block *Qi* to target block content *m*'*,* wherein a parent hash corresponding to the block *Qi* is recorded in a block header of a block *Qi*+1*,* the parent hash is generated through calculation by using original block content *m,* a public key *H,* and an original random number r, the public key *H* is generated through calculation by using node public keys *h1* to *hn* respectively corresponding to blockchain nodes *B1* to *Bn,* and *i* E[1, *n]* and *i* is a positive integer; an execution unit, configured to enable the blockchain node *Bi* to execute a smart contract, which is used to generate a random number when determining that a consensus on the block editing transaction succeeds, wherein the smart contract is used to execute secure multi-party computing related to node private keys *x1* to *xn* respectively corresponding to the blockchain nodes *B1* to *Bn* to generate the private key *X*; and determine corresponding target random number *r'* based on the original block content *m,* the target block content *m'*, the original random number *r*, and the private key *X*, wherein a hash value generated through calculation by using the target block content *m',* the public key H, and the target random number *r'* is the same as the parent hash; and an updating unit, configured to enable the blockchain node *Bi* to update the original block content *m* to the target block content *m'* and the original random number *r* to the target random number *r'.*

According to a third aspect of the one or more embodiments of the present specification, a blockchain node is provided, including: a processor; and a memory configured to store a processor-executable instruction.

The processor implements the method described in the first aspect by executing the executable instruction.

According to a fourth aspect of the one or more embodiments of the present specification, a computer-readable storage medium is provided, and the storage medium stores a computer instruction. The steps of the method described in the first aspect are implemented when the instruction is executed by a processor.

### BRIEF DESCRIPTION OF DRAWINGS

FIG. 1 is a schematic diagram illustrating a blockchain structure according to an example embodiment;
FIG. 2 is a flowchart illustrating a block content editing method according to an example embodiment;
FIG. 3 is a schematic diagram illustrating smart contract creation according to an example embodiment;
FIG. 4 is a schematic diagram illustrating smart contract invocation according to an example embodiment;
FIG. 5 is a schematic structural diagram illustrating a device according to an example embodiment; and
FIG. 6 is a block diagram illustrating a block content editing apparatus according to an example embodiment.

### DESCRIPTION OF EMBODIMENTS

The example embodiments are described in detail here, and examples of the embodiments are shown in the accompanying drawings. When the following description relates to the accompanying drawings, the same numbers in different accompanying drawings indicate the same element or similar elements unless otherwise indicated. The implementations described in the following example embodiments do not represent all implementations consistent with the one or more embodiments of the present specification. On the contrary, they are merely examples of apparatuses and methods consistent with some aspects of the one or more embodiments of the present specification as detailed in the claims.

It is worthwhile to note that in other embodiments, the steps of the corresponding method are not necessarily performed in the order shown and described in the present specification. In some other embodiments, the method can include more or fewer steps than the steps described in the present specification. Further, a single step described in the present specification may be divided into multiple steps for description in other embodiments; and multiple steps described in the present specification may be combined into a single step for description in other embodiments.

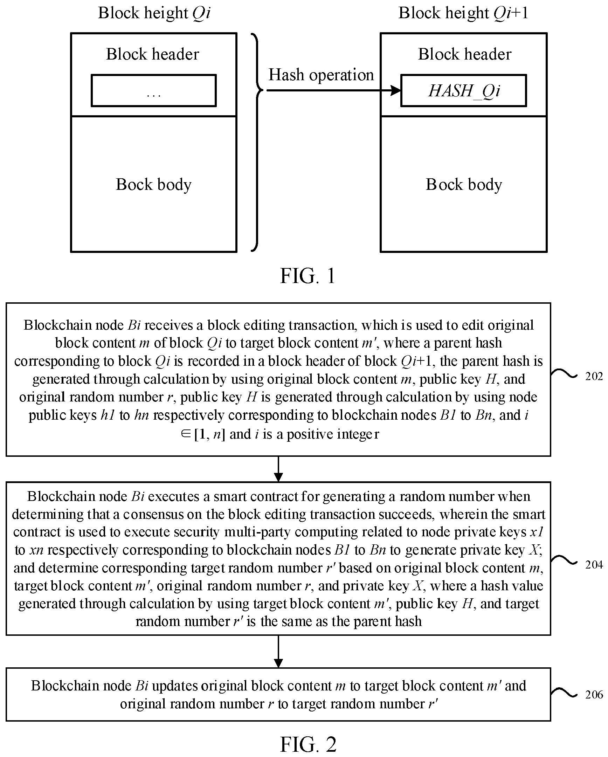

A blockchain is formed by chaining several blocks in sequence, and tamper-resistance of content of the blockchain is related to an anchoring relationship between adjacent blocks. FIG. 1 is a schematic diagram illustrating a blockchain structure according to an example embodiment. As shown in FIG. 1, the anchoring relationship is described by taking two blocks with block heights of *Qi* and *Qi*+1 as an example. For ease of understanding, a block with the block height of *Qi* is referred to as block *Qi,* and a block with a block height of *Qi*+1 is referred to as block *Qi*+1*.*

Block *Qi* and block *Qi*+1 have the same structure and each includes a block header and a block body. In practice, all blocks have the same structure. A block header of block *Qi*+1 includes information *HASH_Qi* shown in FIG. 1. *HASH_Qi* is a parent hash included in block *Qi*+1*,* and the parent hash *HASH_Qi* is obtained by performing a hash operation on content of block *Qi.* Because block *Qi* and block *Qi*+1 are adjacent blocks and block *Qi* is created earlier than block *Qi*+1*,* block *Qi* can be considered as a parent block of block *Qi*+1 and a hash generated based on the content of block *Qi* is referred to as the parent hash. Similarly, if block *Qi* also has a corresponding parent block, a block header of block *Qi* can also include a parent hash corresponding to the parent block; or if block *Qi* is a genesis block, i.e. block *Qi* does not have a parent block, the block header of block *Qi* does not have to include the parent hash.

The hash operation can be performed on any input content and a corresponding hash value can be output. In addition, due to the characteristic of the hash operation, it almost can be considered that there is a one-to-one mapping relationship between input content and hash values, and there is only very small probability that a hash collision may occur, i.e. different input content generates the same hash value. In the related technologies, the occurrence probability of the hash collision can be reduced as much as possible in various ways, such as enlarging value space of hash values, so that the hash collision is almost negligible. Therefore, the content of block *Qi* can be anchored by including parent hash *HASH_Qi* in the block header of block *Qi*+1*.* Because a change in the content of block *Qi* results in a different hash value from parent hash *HASH_Qi,* it is very easy to find that the content of block *Qi* is tampered with.

However, in some applications, for example, private data may be recorded on the blockchain without being encrypted, resulting in a risk of privacy exposure. For another example, erroneous data may be recorded on the blockchain, resulting in a waste of storage space on the blockchain. In conclusion, there is a block content editing need for a chained block. Block content editing solutions provided in the present specification are described below.

FIG. 2 is a flowchart illustrating a block content editing method according to an example embodiment. As shown in FIG. 2, the method can include the following steps:

Step 202: Blockchain node *Bi* receives a block editing transaction, which is used to edit original block content *m* of block *Qi* to target block content *m',* wherein a parent hash corresponding to block *Qi* is recorded in a block header of block *Qi*+1*,* the parent hash is generated through calculation by using original block content *m,* public key *H*, and original random number *r*, public key *H* is generated through calculation by using node public keys *h1* to *hn* respectively corresponding to blockchain nodes *B1* to *Bn,* and *i* ∈[1, *n]* and *i* is a positive integer.

Blockchain node *Bi* can be any node in a blockchain network and does not particularly refer to a certain node. In practice, due to the distribution characteristic of blockchain technologies, each blockchain node in the blockchain network performs the same operation to ensure the consistency of blockchain data respectively maintained by each blockchain node. Therefore, each blockchain node can be considered as blockchain node *Bi.*

Based on the related technologies, a type field can be added to a blockchain transaction, so that blockchain node *Bi* can distinguish between different types of blockchain transactions based on a value of the type field. For example, the value of type field being 0 corresponds to a block editing transaction, and the value of type field being 1 corresponds to another blockchain transaction. Certainly, different types of blockchain transactions can be distinguished from each other in other ways. Implementations are not limited in the present specification. The block editing transaction is created by a certain transaction initiator and then sent to the blockchain network. The transaction initiator can be a certain user. Blockchain node *Bi* can receive the block editing transaction from a client device used by the transaction initiator. Alternatively, the transaction initiator can send the block editing transaction to blockchain node *Bj* by using the client device, and blockchain node *Bi* can receive the block editing transaction from blockchain node *Bj.*

Generally, block content should be prevented from being randomly edited. For example, blockchain node *Bi* can determine the transaction initiator of the block editing transaction, and edit the block content of block *Qi* based on the block editing transaction when the transaction initiator has an editing permission for block *Qi.* Otherwise, the block editing transaction may not be executed. Blockchain node *Bi* can manage the editing permission in various ways. For example, information about a blockchain administrator can be recorded in a genesis block of the blockchain, and blockchain node *Bi* can consider that the transaction initiator has the editing permission only when the transaction initiator is the blockchain administrator. This way is applicable to all blocks included in the blockchain. For another example, a list of accounts having the editing permission can be included in block *Qi,* and blockchain node *Bi* can consider that the transaction initiator has the editing permission only when the transaction initiator belongs to the account list. This way is equivalent to maintaining one account list in each block, wherein account lists maintained in different blocks are independent from each other, thereby realizing block-level editing permission management with relatively higher flexibility.

Assume that the blockchain network includes *n* blockchain nodes, i.e. previously-mentioned blockchain nodes *B1* to *Bn,* and each blockchain node maintains a node public-private key pair corresponding to identity information of the blockchain node, for example, blockchain node *B1* corresponds to node public key *h1* and node private key *x1*, and blockchain node *B2* corresponds to node public key *h2* and node private key *x2,* ..., and blockchain node *Bn* corresponds to node public key *hn* and node private key *xn*. Blockchain node *Bi* needs to self-maintain node private key *xi* of the blockchain node *Bi* and prevent node private key x*i* from being leaked, and node public key *hi* needs to be shared with other blockchain nodes, so that each blockchain node can know node public keys *h1* to *hn* and then can generate public key *H* based on node public keys *h1* to *hn,* for generating the parent hash and performing a subsequent block editing process.

Step 204: Blockchain node *Bi* executes a smart contract that generates a random number when determining that a consensus on the block editing transaction succeeds, wherein the smart contract is used to execute secure multi-party computing related to node private keys *x1* to *xn* respectively corresponding to blockchain nodes *B1* to *Bn* to generate private key *X*; and determine corresponding target random number *r'* based on original block content *m,* target block content *m',* original random number *r*, and private key *X*, wherein a hash value generated through calculation by using target block content *m',* public key *H,* and target random number *r'* is the same as the parent hash.

Blockchain nodes *B1* to *Bn* need to perform the consensus on the block editing transaction. When the consensus on the block editing transaction succeeds, it indicates that each blockchain nodes agrees to edit the block content of block *Qi* based on the block editing transaction, and then the blockchain nodes execute the block editing transaction to edit the block content of block *Qi.* Blockchain nodes *B1* to *Bn* can perform the consensus by using any type of consensus algorithm. Implementations are not limited in the present specification.

In a blockchain network using consensus algorithms such as proof of work (POW), proof of stake (POS), or delegated proof of stake (DPOS), a consensus process includes a competition for a bookkeeping right among blockchain nodes. Ethereum is taken as an example. Nodes in Ethereum are also generally nodes competing for the bookkeeping right. The blockchain nodes can perform the block editing transaction locally as nodes competing for the bookkeeping right. A certain node in all the nodes competing for the bookkeeping right becomes a bookkeeping node when winning in the current round of competition for the bookkeeping right. Assume that the blockchain node becomes the bookkeeping node when winning in the current round of competition for the bookkeeping right. Certainly, if the blockchain node does not win in the current round of competition for the bookkeeping right, the blockchain node is not the bookkeeping node, and another node may become the bookkeeping node. With regard to the blockchain network competing for the bookkeeping right, after the blockchain node in the present specification performs verification on the received block editing transaction before the consensus, if the verification succeeds, the blockchain node broadcasts the block editing transaction to the other blockchain nodes in the blockchain network, so that no matter which node is the bookkeeping node in the current round, the bookkeeping node can package the block editing transaction (or further package other transactions together) and generate a new block, and send the new block to non-bookkeeping nodes for the consensus, the non-bookkeeping nodes can add the new block to the end of the original blockchain when verification performed by the non-bookkeeping nodes on the received new block succeeds, thereby completing the bookkeeping process and reaching the consensus. If the verification performed by the blockchain node in the present specification on the block editing transaction before the consensus fails, the blockchain node does not broadcast the block editing transaction to the other blockchain nodes.

In a blockchain network using a mechanism such as practical byzantine fault tolerance (PBFT), a node having a bookkeeping right is determined through negotiation before the current round of bookkeeping. Therefore, after the blockchain node receives the block editing transaction, assume that verification on the block editing transaction before the consensus succeeds, the blockchain node sends the block editing transaction to the bookkeeping node when the blockchain node is not the bookkeeping node in the current round; or packages the block editing transaction (or further packages other transactions together) and generates a new block, and then sends the generated new block to non-bookkeeping nodes for the consensus when the blockchain node is the bookkeeping node in the current round. In addition, after the blockchain node receives the block editing transaction, assume that verification on the block editing transaction before the consensus fails, the blockchain node does not send the block editing transaction to the bookkeeping node when the blockchain node is not the bookkeeping node in the current round, and the blockchain node does not package the block editing transaction to generate a new block when the blockchain node is the bookkeeping node in the current round. For the new block generated by the bookkeeping node, the non-bookkeeping nodes can add the new block to the end of the original blockchain after verification performed by the non-bookkeeping nodes on the received new block succeeds, thereby completing the bookkeeping process and reaching the consensus.

In the related technologies, a commonly used hash algorithm *f()* has only one input. For example, if the hash value of block *Qi* is calculated, an input is the block content *m* of block *Qi,* i.e. the hash value is *f(m).* If block content *m* needs to be changed to block content *m',* it is necessary to just make a hash collision between *m* and *m'* to allow *f(m)*=*f(m'),* and such a probability is almost negligible. Therefore, the block content *m* actually cannot be modified as needed. However, in the technical solutions of the present specification, a used hash algorithm *f()* has two inputs. For example, if the hash value of block *Qi* is calculated, inputs are block content *m* and random number *r* of block *Qi,* i.e. the hash value is *f(m, r).* If block content *m* needs to be changed to block content *m',* calculated hash value *f(m, r)*=*f(m', r')* can be ensured only by identifying random number *r'* matching block content *m'.* Therefore, block content *m* can be modified to any block content *m'* as needed.

Blockchain node *Bi* cannot randomly generate random number *r'*, and must use private key *X* corresponding to public key *H.* Otherwise, blockchain node *Bi* may randomly modify the block content. Therefore, in the present specification, a distributed private key management method is used, so that each blockchain node *Bi* holds only node private key *xi*, and the generation of private key *X* is related to all node private keys *x1* to *xn.* In this case, any blockchain node can be prevented from obtaining private key *X* provided that each blockchain node maintains a node private key hold by that blockchain node and a certain blockchain node is prevented from holding all the node private keys. The present specification further provides a method for implementing secure multi-party computing by using the smart contract to generate private key *X* and then generate random number *r'* based on private key *X*, thereby satisfying the node content editing needs while preventing the node private key or private key *X* from being exposed.

A smart contract can be deployed and invoked for any one of a public blockchain, a private blockchain, and a consortium blockchain. Ethereum is taken as an example. Users are supported in creating and/or invoking some complex logic in an Ethereum network. It is the biggest challenge for distinguishing Ethereum from bitcoin blockchain technologies. The core of Ethereum serving as a programmable blockchain is an Ethereum virtual machine (EVM), and each Ethereum node can run an EVM. The EVM is a Turing-complete virtual machine. It means that various types of complex logic can be implemented by using the EVM. Users publish and invoke smart contracts on the EVM.

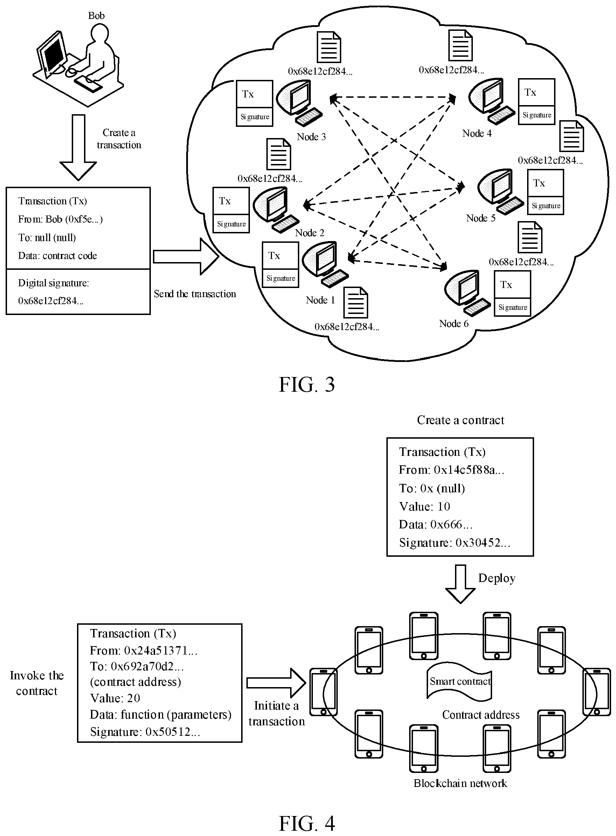

For example, as shown in FIG. 3, after Bob sends a transaction including information about creating a smart contract to an Ethereum network, an EVM of node 1 can execute the transaction and generate a corresponding contract instance. A data field of the transaction can save code (for example, bytecode) of the smart contract, and a to field of the transaction is an empty account. After nodes reach a consensus by using a consensus mechanism, the contract is successfully created and subsequently a user can invoke the contract. After the contract is created, a contract account corresponding to the smart contract appears on the blockchain and has a specific address. The contract code and account storage are saved in the contract account. Behavior of the smart contract is controlled by using the contract code, and the account storage of the smart contract saves a state of the contract. In other words, the smart contract enables a virtual account including the contract code and the account storage to be generated on the blockchain.

Further, as shown in FIG. 4, Ethereum is still taken as an example. Bob sends a transaction for invoking a smart contract to an Ethereum network, an EVM of node 1 can execute the transaction and generate a corresponding contract instance. In FIG. 4, a from field of the transaction is an address of an account initiating invocation of the smart contract, "0x692a70d2..." in a to field represents an address of the invoked smart contract, a value field is a value of ETH in Ethereum, and a data field of the transaction saves a method and parameters for invoking the smart contract. The smart contract can be executed independently at each node in the blockchain network in a prescribed way, and all execution records and data are saved on the blockchain. Therefore, when such a transaction is completed, a transaction certificate that cannot be tampered with or lost is saved on the blockchain.

Contract code included in the smart contract is pre-defined and checkable, and the corresponding contract code can be automatically executed after the smart contract is invoked, to implement a predefined logical function, which can ensure that the smart contract always can independently and faithfully accomplish a calculation task. Therefore, in applying the smart contract to a block editing process, the smart contract can implement calculation of private key *X* and random number *r'* without leaking private key *X* or data used to calculate private key *X* to the blockchain node, and the whole calculation process is equivalent to a "black box" for the blockchain node, thereby preventing the blockchain node from holding private key *X* or the data used to calculate private key *X*.

Private keys *x1* to *xn* and derived data thereof can be shared among blockchain nodes *B1* to *Bn* by using a secret sharing algorithm, and shared data obtained by each blockchain node is the data used to calculate private key *X*. For example, blockchain node *Bi* can fragment node private key *xi* maintained by the blockchain node *Bi* by using the secret sharing algorithm, to obtain private key fragments *xi_1* to *xi_n.* For example, blockchain node *B1* processes node private key *x1* into private key fragments *x1_1* to *x1_n,* blockchain node *B2* processes node private key *x2* into private key fragments *x2_1* to *x2_n,* ..., and blockchain node *Bn* processes node private key *xn* into private key fragments *xn*_*1* to *xn_n.* Then, blockchain node *Bi* can share private key fragment *xi_j* with blockchain node *Bj,* where *j*∈[1, i-1]∪ [i+1, n] and *j* is a positive integer. For example, when *i*=1, blockchain node *B1* shares private key fragment *x1_2* with blockchain node *B2*, shares private key fragment *x1_3* with blockchain node *B3,* ..., and shares private key fragment *x1_n* with blockchain node *Bn.* For another example, when *i*=2, blockchain node *B2* shares private key fragment *x2_1* with blockchain node *B1,* shares private key fragment *x2_3* with blockchain node *B3,* ..., and shares private key fragment *x2_n* with blockchain node *Bn,* so that blockchain node *Bi* can finally obtain private key fragment *xi_i* generated by the blockchain node *Bi* and private key fragments *xj_i* respectively shared by other blockchain nodes *Bj.* It is equivalent that blockchain node *Bi* can finally obtain private key fragments *x1_i* to *xn_i.* For example, blockchain node *B1* obtains private key fragments *x1_1* to *xn_1,* blockchain node *B2* obtains private key fragments *x1_2* to *xn_2,* ..., and blockchain node *Bn* obtains private key fragments *x1_n* to *xn_n.*

In this case, when the block content of block *Qi* needs to be edited, each blockchain node needs to share private key fragments obtained by the blockchain node, to recover private key *X*. For example, blockchain node *Bi* can recover private key fragments *x1_i* to *xn i* maintained by blockchain node *Bi* by using the secret sharing algorithm, to obtain intermediate fragment *xi'*. Then, each blockchain node can share an intermediate fragment generated by the blockchain node, so that each blockchain node can obtain intermediate fragments *x1'* to *xn'.* In this case, when invoking the smart contract, blockchain node *Bi* can use intermediate fragments *x1'* to *xn'* as input parameters of the smart contract, so that the smart contract can recover intermediate fragments *x1'* to *xn'* by using the secret sharing algorithm, to obtain private key *X* and then generate random number *r'.*

In a process of invoking and executing the smart contract, blockchain node *Bi* may need to cache intermediate fragments *x1'* to *xn'* and private key *X* generated in the process. To prevent an untrusted application on blockchain node *Bi* from reading intermediate fragments *x1'* to *xn'* or private key *X* from a cache, a trusted execution environment (TEE) can be deployed on blockchain node *Bi,* and execution of the smart contract in the TEE can be ensured.

The TEE is a security extension based on CPU hardware and is completely isolated from the outside. The TEE was originally proposed by the Global Platform to implement secure isolation between resources on mobile devices, and is parallel to an operating system to provide a trusted secure execution environment for an application. The trust zone technology of ARM was the first to implement the real commercial TEE technology. With the rapid development of the Internet, the demand for security is increasingly high, in addition to mobile devices, cloud devices and data centers propose more demands for the TEE. The concept of TEE has also been rapidly developed and expanded. The TEE now has a much broader concept than the originally proposed concept. For example, server chip vendors such as Intel and AMD have introduced hardware-assisted TEEs and enriched the concept and characteristics of the TEE, which have been widely recognized in industry. The TEE now commonly refers to such a hardware-assisted TEE technology in more cases. Unlike a mobile terminal, cloud access requires remote access and users of end-user devices are invisible to a hardware platform. Therefore, the first step in using the TEE is to confirm authenticity of the TEE. Therefore, all TEE technologies now introduce a remote attestation mechanism endorsed by a hardware vendor (mainly by a CPU vendor), and it is ensured that users can verify a TEE state by using digital signature technologies. However, even the secure resource isolation cannot satisfy security demands, and further data privacy protection is also proposed. Commercial TEEs, including Intel SGX and AMD SEV, also provide a memory encryption technology to confine trusted hardware inside a CPU, where bus and memory data are ciphertext to prevent malicious users from snooping. For example, TEE technologies such as Intel Software Guard Extension (SGX) isolate code execution, remote attestation, security configuration, secure data storage, and trusted paths for code execution. Applications running in the TEE are secured and hardly accessible to third parties.

The Intel SGX technology is taken as an example. SGX provides an enclave, namely, an encrypted trusted execution area in a memory, where data is protected by the CPU from being stolen. For example, a first blockchain node uses a CPU supporting SGX. A partial area, an enclave page cache (EPC), can be allocated in the memory by using a newly added processor instruction, and data in the EPC is encrypted by using a memory encryption engine (MEE) in the CPU. The encrypted content in the EPC is decrypted into plaintext only after entering the CPU. Therefore, in SGX, users can distrust an operating system, a virtual machine monitor (VMM), and even a basic input output system (BIOS), and only need to trust the CPU to ensure that private data is not leaked. In practice, the private data can be encrypted and transferred to the enclave in the form of ciphertext, and a corresponding key can also be transferred to the enclave through remote attestation. Then, the data is used for calculation under encryption protection of the CPU, and a result is returned in the form of ciphertext. In this mode, strong computing power can be used without concern for data leakage.

The smart contract can further actively delete generated private key *X,* for example, clear cache space for storing private key *X,* after determining target random number *r'.* Similarly, the smart contract can actively delete intermediate fragments *x1'* to *xn',* for example, clear cache space for storing intermediate fragments *x1'* to *xn',* after determining private key *X*. The cache space is actively cleared, so that an untrusted application can be prevented from stealing private key *X* or intermediate fragments *x1'* to *xn'* from the cache, thereby improving security.

The related technologies include many hash algorithms that satisfy the operation demands of the present specification, such as a chameleon hash algorithm. Taking the chameleon hash algorithm as an example, a hash value calculation formula is: *HASH*=*g*^*a*^{∗}*H*^*b,* where g is a predetermined generator, *H* is a public key, *a* is data, and *b* is a random number. For example, when *a* is block content m, *b* is random number *r*; or when *a* is block content *m',* b is random number *r'.* Therefore, parent hash *HASH _Qi*=*g*^*m*^{∗}*H*^*r* can be calculated.

Because the node public-private key pair satisfies *hi*=*g*^*xi,* public key *H*=*h1*^{∗}*h2*^{∗}*...*^{∗}*hn* and private key *X*=*x1*+*x2*+*...*+*xn* are set, and then the parent hash is obtained as follows:
*HASH_Qi*=*g*^*m*^{∗}*H*^*r*=*g*^*m*^{∗}(*h1*^{∗}*h2*^{∗}*...*^{∗}*hn*)^*r*=*g*^*m*^{∗}(*g*^*x1*^{∗}*g*^*x2*^{∗}...^{∗}*g*^*xn*)^*r*=*g*^[*m*+(*x 1*+*x2*+*...*+*xn*)^{∗}*r*]=*g*^(*m*+*Xr*)*.* Similarly, a corresponding parent hash obtained after block editing can be calculated as follows:
*HASH_Qi'*=*g*^*m'*^{∗}*H*^*r*=*g*^*m'*^{∗}(*h1*^{∗}*h2*^{∗}...^{∗}*hn*)^*r'*=*g*^*m'*^{∗}(*g*^*x1*^{∗}*g*^*x2*^{∗}*...*^{∗}*g*^*xn*)^*r'*=*g*^[ *m'*+(*x1*+*x2*+*...*+*xn*)^{∗}*r'*]=*g*^(*m'*+*Xr'*)*.* Because the parent hash values obtained before and after the block editing need to be consistent, namely, *HASH_Qi*=*HASH_Qi', g*^(*m*+*Xr*)=*g*^(*m'*+*Xr'*) can be obtained, and then random number *r'*=(*m*+*Xr*-*m'*)/*X* can be determined.

It can be seen that private key *X* can be calculated by using the smart contract, and random number *r'* can be calculated by using private key *X*, random number *r*, block content *m,* and block content *m'.* In addition, because values of random number *r*, block content *m,* and block content *m'* are all known, private key *X* is the central factor for successfully calculating random number *r*'. Therefore, private key *X* and the data used to calculate private key *X* need to be encrypted in the previously described way. Otherwise, the block content can be randomly modified based on private key *X* and the data used to calculate private key *X*, resulting in a security risk.

Step 206: Blockchain node *Bi* updates original block content *m* to target block content *m'* and original random number *r* to target random number *r'*.

Blockchain node *Bi* needs to add the hash value of block *Qi,* namely, parent hash *HASH_Qi,* to the block header of the block *Qi+1* when generating block *Qi+1.* Because the calculation of parent hash *HASH_Qi* relates to block content *m,* random number *r*, and public key *H,* and both block content *m* and random number r are fixed, the value of parent hash *HASH_Qi* is affected by public key *H.* The public key *H* is calculated by using node public keys *h1* to *hn* corresponding to the blockchain nodes. Therefore, in the process of generating block *Qi+1,* blockchain node *Bi* needs to determine node public key *hi* used for block *Qi,* send determined node public key *hi* to the other blockchain nodes, and receive node public keys used for block *Qi* that are determined by the other blockchain nodes, so that each blockchain node finally obtains node public key *h1* to *hn* , to generate public key *H* and then generate parent hash *HASH_Qi.*

If the node public-private key pair used by each blockchain node keeps unchanged, i.e. blockchain node *Bi* always uses public-private key pair (*hi, xi*), the value of public key *H* also keeps unchanged, so that the blockchain node needs to share the node public key only once, instead of sharing the node public key when each block is generated. However, long-term invariance of the public-private key pair may lead to a security risk. Therefore, the blockchain node can periodically or temporarily change the used public-private key pair. As such, even if some public-private key pairs are leaked, not all blocks are at risk of being tampered with. If a periodical change method is used, all the blockchain nodes change the public-private key pairs used by the blockchain nodes based on a fixed period, and the blockchain nodes can share the changed node public key in the process of generating the first block after each change, but do not need to share the changed node public key in the rest of the same period. If a temporary change method is used, each blockchain node cannot determine whether the other blockchain nodes are to change their public-private key pairs. Therefore, it is necessary to share the node public key each time a block is generated. The temporary change method is more random than the periodic change method, thereby achieving higher security.

As previously described, if the node public-private key pair used by each blockchain node is unchanged, blockchain node *Bi* inevitably uses the same public-private key pair for different blocks, so that the number of sharing times of the node public key can be minimized. However, if the blockchain node changes the public-private key pair, blockchain node *Bi* uses different public-private key pairs for at least two blocks. So that blockchain node *Bi* needs to record a mapping relationship between each block and a correspondingly used public-private key pair. As such, in the subsequent editing for the block content of block *Qi,* the block content of block *Qi* can be edited based on the mapping relationship. For example, it can be ensured that blockchain node *Bi* uses a correct private key fragment to generate a corresponding intermediate fragment, and then correct private key *X* is ensured.

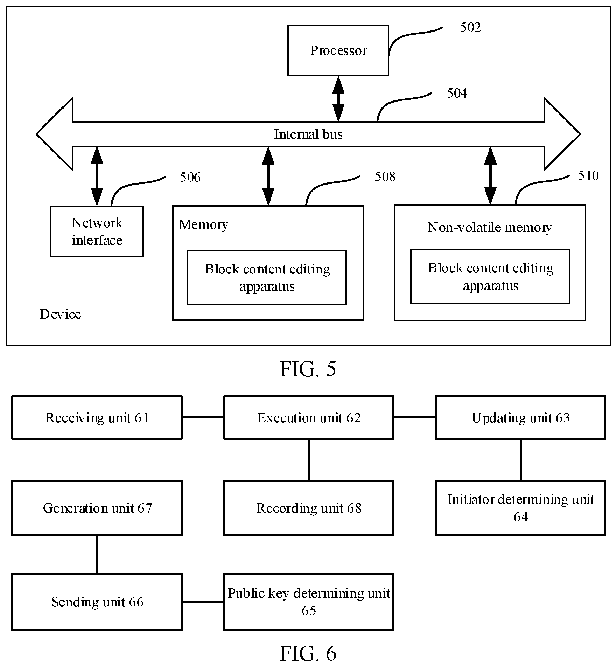

FIG. 5 is a schematic structural diagram illustrating a device according to an example embodiment. Referring to FIG. 5, at a hardware level, the device includes a processor 502, an internal bus 504, a network interface 506, a memory 508, and a non-volatile memory 510. Certainly, the device may further include hardware needed by other services. The processor 502 reads a corresponding computer program from the non-volatile memory 510 to the memory 508 and then runs the computer program to form a block content editing apparatus at a logical level. Certainly, in addition to a software implementation, the one or more embodiments of the present specification do not exclude other implementations, such as a logic device or a combination of hardware and software, i.e. an execution body of the following processing procedure is not limited to each logic unit, and can be a hardware or logic device.

Referring to FIG. 6, in the software implementation, the block content editing apparatus can include:
a receiving unit 61, configured to enable blockchain node *Bi* to receive a block editing transaction, which is used to edit original block content *m* of block *Qi* to target block content *m',* where a parent hash corresponding to block *Qi* is recorded in a block header of block *Qi+1,* the parent hash is generated through calculation by using original block content *m,* public key *H,* and original random number *r*, public key *H* is generated through calculation by using node public keys *h1* to *hn* respectively corresponding to blockchain nodes *B1* to *Bn,* and *i* ∈[1, *n*] and *i* is a positive integer
an execution unit 62, configured to enable blockchain node *Bi* to execute a smart contract that generates a random number when determining that a consensus on the block editing transaction succeeds, where the smart contract is used to execute secure multi-party computing related to node private keys *x1* to *xn* respectively corresponding to blockchain nodes *B1* to *Bn* to generate private key *X;* and determine corresponding target random number r' based on original block content *m,* target block content *m',* original random number *r*, and private key *X*, where a hash value generated through calculation by using target block content *m',* public key *H,* and target random number *r'* is the same as the parent hash; and
an updating unit 63, configured to enable blockchain node *Bi* to update original block content *m* to target block content *m'* and original random number *r* to target random number *r'.*

Optionally, the execution unit 62 generates private key *X* through secure multi-party computing, including the following:
obtaining intermediate fragments *x1'* to *xn',* where intermediate fragment *xi'* is obtained by blockchain node *Bi* by recovering private key fragments *x1_i* to *xn i* by using a secret sharing algorithm, private key fragments *xi*_*1* to *xi_n* are obtained by blockchain node *Bi* by fragmenting node private key *xi* by using the secret sharing algorithm, *xi_j* is shared with by blockchain node *Bi* blockchain node *Bj,* and *j*∈[1, *i*-1]∪[i+1, n] and *j* is a positive integer; and
recovering intermediate fragments *x1'* to *xn'* by using the secret sharing algorithm, to obtain private key *X*.

Optionally, the execution unit 62 is specifically configured to:
execute the smart contract that generates the random number in a trusted execution environment deployed on blockchain node *Bi.*

Optionally, the smart contract is further used to delete generated private key *X* when target random number *r'* is determined.

Optionally, public key *H* is a product of node public keys *h1* to *hn,* private key *X* is a sum of node private keys *x1* to *xn,* and *hi*=*g*^*xi* when a hash value is calculated by using a formula *g*^*a*^{∗}*H*^*b,* where
*g* is a predetermined generator; and *a*=*m* and *b*=*r,* or *a*=*m'* and *b*=*r'.*

Optionally, the block content editing apparatus further includes:
an initiator determining unit 64, configured to enable blockchain node *Bi* to determine a transaction initiator of the block editing transaction; and
the updating unit 63 is configured to enable blockchain node *Bi* to update the block content of block *Qi* based on the block editing transaction when the transaction initiator has an editing permission for block *Qi.*

Optionally, the block content editing apparatus further includes:
a public key determining unit 65, configured to enable blockchain node *Bi* to determine node public key *hi* used for block *Qi* in a process of generating block *Qi*+*1*;
a sending unit 66, configured to enable blockchain node *Bi* to send determined node public key *hi* to the other blockchain nodes, and receive node public keys used for block *Qi* that are determined by the other blockchain nodes, to obtain node public keys *h1* to *hn*; and
a generation unit 67, configured to enable blockchain node *Bi* to generate the parent hash based on public key *H* corresponding to node public keys *h1* to *hn,* and add the parent hash to the block header of block Qi+1.

Optionally, blockchain node *Bi* uses the same public-private key pair for different blocks; or
when blockchain node *Bi* uses different public-private key pairs for at least two blocks, the apparatus further includes: a recording unit 68, configured to enable blockchain node *Bi* to record a mapping relationship between each block and a correspondingly used public-private key pair to edit the block content of block *Qi* based on the mapping relationship..

The systems, methods, modules, or units illustrated in the previous embodiments can be implemented by using a computer chip or an entity, or can be implemented by using a product having a certain function. A typical implementation device is a computer. A specific form of the computer can be a personal computer, a laptop computer, a cellular phone, a camera phone, a smartphone, a personal digital assistant, a media player, a navigation device, an email sending/receiving device, a game console, a tablet computer, a wearable device, or a combination of any several of these devices.

In a typical configuration, the computer includes one or more processors (CPUs), input/output interfaces, network interfaces, and memories.

The memory may include forms such as a non-persistent memory, a random access memory (RAM), and/or a non-volatile memory in a computer-readable medium, such as a read-only memory (ROM) or a flash memory (flash RAM). The memory is an example of the computer-readable medium.

The computer-readable medium includes persistent, non-persistent, movable, and unmovable media that can store information by using any method or technology. The information can be a computer-readable instruction, a data structure, a program module, or other data. Examples of the computer storage medium include but are not limited to a phase-change random access memory (PRAM), a static random access memory (SRAM), a dynamic random access memory (DRAM), a random access memory (RAM) of another type, a read-only memory (ROM), an electrically erasable programmable ROM (EEPROM), a flash memory or another memory technology, a compact disc read-only memory (CD-ROM), a digital versatile disc (DVD) or another optical storage, a cassette, a magnetic disk storage, a quantum memory, a graphene-based storage medium or another magnetic storage device, or any other non-transmission medium. The computer storage medium can be configured to store information accessible to a computing device. As described in the present specification, the computer-readable medium does not include computer-readable transitory media such as a modulated data signal and a carrier.

It is worthwhile to note that the terms "comprise", "include", or any other variation thereof are intended to cover a non-exclusive inclusion, so that a process, method, product, or device that includes a list of elements includes those elements and further includes other elements not expressly listed or inherent to such a process, method, product, or device. An element proceeded by the phrase "comprise a... " does not, without more constraints, preclude the existence of additional identical elements in a process, method, product, or device that includes the element.

The specific embodiments of the present specification are previously described. Other embodiments fall within the scope of the appended claims. In some cases, the actions or steps in the claims can be performed in different orders from the orders in the embodiments and still can achieve the desired results. In addition, the processes illustrated in the accompanying drawings do not necessarily require the shown specific order or sequence to achieve the desired results. In some implementations, multitasking and parallel processing are also possible or may be advantageous.

The terms used in the one or more embodiments of the present specification are intended merely for the purpose of describing specific embodiments and are not intended to limit the one or more embodiments of the present specification. As used in the one or more embodiments of the present specification and the claims, singular forms "a", "an" and "the" are also intended to include plural forms, unless otherwise specified in the context clearly. It should also be understood that the term "and/or" used in the present specification refers to and includes any or all possible combinations of one or more associated listed items.

It should be understood that, although terms "first", "second", "third", etc. may be used in describing various types of information in the one or more embodiments of the present specification, such information should not be limited to such terms. These terms are only used to distinguish between information of the same type. For example, first information can also be referred to as second information, and similarly, second information can also be referred to as first information, without departing from the scope of the one or more embodiments of the present specification. Depending on the context, the word "if" used here can be interpreted as "at the time of", "when" or "in response to determining".

## Claims

1. A block content editing method, comprising:
receiving (202), by a blockchain node *Bi,* a block editing transaction, which is used to edit original block content *m* of a block *Qi* to target block content *m',* wherein a parent hash corresponding to the block *Qi* is recorded in a block header of a block *Qi*+1*,* the parent hash is generated through calculation by using original block content *m,* a public key *H,* and an original random number *r,* the public key *H* is generated through calculation using node public keys *h1* to *hn* respectively corresponding to blockchain nodes *B1* to *Bn,* and *i* E [1, *n]* and *i* is a positive integer;
executing (204), by the blockchain node *Bi,* a smart contract that generates a random number when determining that a consensus on the block editing transaction succeeds, wherein the smart contract is used to execute secure multi-party computing related to node private keys *x1* to *xn* respectively corresponding to the blockchain nodes *B1* to Bn to generate a private key *X;* and determining corresponding target random number *r'* based on the original block content *m,* the target block content *m',* the original random number *r*, and the private key *X*, wherein a hash value generated through calculation by using the target block content *m',* the public key *H,* and the target random number *r'* is the same as the parent hash; and
updating (206), by the blockchain node *Bi,* the original block content *m* to the target block content *m'* and the original random number *r* to the target random number *r'*,
wherein generating the private key *X* through the secure multi-party computing comprises:
obtaining intermediate fragments *x1'* to *xn'*, wherein an intermediate fragment *xi'* is obtained by the blockchain node *Bi* via recovering private key fragments *x1_i* to *xn_i* using a secret sharing algorithm, wherein private key fragments *xi*_*1* to *xi_n* are obtained by the blockchain node *Bi* via fragmenting a node private key *xi* using the secret sharing algorithm, *xi_j* is shared by the blockchain node *Bi* with a blockchain node *Bj,* and *j*∈[1, *i*-1]∪[*i*+1, *n*] and *j* is a positive integer; and
obtaining the private key *X* by recovering the intermediate fragments *x1'* to *xn'* using the secret sharing algorithm.

2. The method according to claim 1, wherein the executing (204) a smart contract that generates a random number comprises:
executing the smart contract that generates the random number in a trusted execution environment deployed on the blockchain node *Bi.*

3. The method according to claim 1, wherein the smart contract is further used to delete the generated private key *X* when the target random number *r'* is determined.

4. The method according to claim 1, wherein the public key *H* is a product of the node public keys *h1* to *hn,* the private key *X* is a sum of the node private keys *x1* to *xn,* and *hi*=*g*^*xi* when the hash value is calculated by using a formula *g*^*a*^{∗}*H*^*b,* wherein
g is a predetermined generator; and a=m and b=r, or a=m' and b=r'.

5. The method according to claim 1, further comprising:
determining, by the blockchain node *Bi,* a transaction initiator of the block editing transaction; and
updating, by the blockchain node *Bi,* the original block content *m* of the block *Qi* based on the block editing transaction when the transaction initiator has an editing permission for the block *Qi.*

6. The method according to claim 1, further comprising:
determining, by the blockchain node *Bi,* a node public key *hi* used for the block *Qi* in a process of generating the block *Qi*+1;
sending, by the blockchain node *Bi,* the determined node public key *hi* to the other blockchain nodes, and receiving node public keys used for the block *Qi* that are determined by the other blockchain nodes, to obtain the node public keys *h1* to *hn*; and
generating, by the blockchain node *Bi,* the parent hash based on the public key *H* corresponding to the node public keys *h1* to *hn,* and adding the parent hash to the block header of the block *Qi*+1*.*

7. The method according to claim 1, wherein
the blockchain node *Bi* uses a same public-private key pair for different blocks; or
when the blockchain node *Bi* uses different public-private key pairs for at least two blocks, the method further comprises: recording, by the blockchain node *Bi,* a mapping relationship between each block and a correspondingly used public-private key pair to edit the original block content *m* of the block *Qi* based on the mapping relationship.

8. A block content editing apparatus, comprising:
a receiving unit (61), configured to enable a blockchain node *Bi* to receive a block editing transaction, which is used to edit original block content *m* of a block *Qi* to target block content *m',* wherein a parent hash corresponding to the block *Qi* is recorded in a block header of a block *Qi+1,* the parent hash is generated through calculation by using the original block content *m,* a public key *H,* and an original random number *r*, the public key *H* is generated through calculation using node public keys *h1* to *hn* respectively corresponding to blockchain nodes *B1* to *Bn,* and *i* E [1, *n]* and *i* is a positive integer;
an execution unit (62), configured to enable the blockchain node *Bi* to execute a smart contract that generates a random number when determining that a consensus on the block editing transaction succeeds, wherein the smart contract is used to execute secure multi-party computing related to node private keys *x1* to *xn* respectively corresponding to the blockchain nodes *B1* to *Bn* to generate a private key *X;* and determine corresponding target random number *r'* based on the original block content *m,* the target block content *m',* the original random number *r*, and the private key *X*, wherein a hash value generated through calculation by using the target block content *m',* the public key *H*, and the target random number *r'* is the same as the parent hash; and an updating unit (63), configured to enable the blockchain node *Bi* to update the original block content *m* to the target block content *m'* and the original random number *r* to the target random number *r'*,
wherein the execution unit (62) generates the private key *X* through the secure multi-party computing by:
obtaining intermediate fragments *x1'* to *xn'*, wherein an intermediate fragment *xi'* is obtained by the blockchain node *Bi* via recovering private key fragments *x1_i* to *xn i* using a secret sharing algorithm, wherein private key fragments *xi_1* to *xi_n* are obtained by the blockchain node *Bi* via fragmenting a node private key *xi* using the secret sharing algorithm, *xi_j* is shared by the blockchain node *Bi* with a blockchain node *Bj,* and *j*∈[1, *i*-1]∪[*i*+1, *n*] and *j* is a positive integer; and
obtaining the private key *X* by recovering the intermediate fragments *x1'* to *xn'* using the secret sharing algorithm.

9. A blockchain node, comprising:
at least one processor; and
at least one memory configured to store a processor-executable instruction, wherein
the at least one processor implements the method according to any one of claims 1 to 7 by executing the processor-executable instruction.

10. A computer-readable storage medium, storing a computer instruction, wherein the step of the method according to any one of claims 1 to 7 is implemented when the computer instruction is executed by at least one processor.

## Patentansprüche

1. Blockinhaltsbearbeitungsverfahren, umfassend:
Empfangen (202), durch einen Blockchain-Knoten *Bi,* einer Blockbearbeitungstransaktion, die verwendet wird, um ursprünglichen Blockinhalt *m* eines Blocks *Qi* auf Zielblockinhalt *m'* zu bearbeiten, wobei ein übergeordneter Hash, der dem Block *Qi* entspricht, in einem Block-Header eines Blocks *Qi*+1 aufgezeichnet wird, der übergeordnete Hash durch Berechnung unter Verwendung von ursprünglichem Blockinhalt *m*, einem öffentlichen Schlüssel *H* und einer ursprünglichen Zufallszahl *r* erzeugt wird, der öffentliche Schlüssel *H* durch Berechnung unter Verwendung von öffentlichen Knotenschlüsseln *h1* bis *hn* erzeugt wird, die jeweils Blockchain-Knoten *B1* bis *Bn* entsprechen, und *i* E [1, *n]* und *i* eine positive ganze Zahl ist;
Ausführen (204), durch den Blockchain-Knoten *Bi,* eines Smart Contract, der eine Zufallszahl erzeugt, wenn bestimmt wird, dass ein Konsens über die Blockbearbeitungstransaktion erfolgreich ist, wobei der Smart Contract verwendet wird, um sicheres Mehrparteienrechnen in Bezug auf private Knotenschlüssel *x1* bis *xn* auszuführen, die jeweils den Blockchain-Knoten *B1* bis *Bn* entsprechen, um einen privaten Schlüssel *X* zu erzeugen; und
Bestimmen der entsprechenden Zielzufallszahl r' basierend auf dem ursprünglichen Blockinhalt *m,* dem Zielblockinhalt *m',* der ursprünglichen Zufallszahl *r* und dem privaten Schlüssel *X*, wobei ein Hash-Wert, der durch Berechnung unter Verwendung des Zielblockinhalts *m',* des öffentlichen Schlüssels *H* und der Zielzufallszahl *r*' erzeugt wird, derselbe wie der übergeordnete Hash ist; und
Aktualisieren (206), durch den Blockchain-Knoten *Bi,* des ursprünglichen Blockinhalts m auf den Zielblockinhalt *m*' und der ursprünglichen Zufallszahl *r* auf die Zielzufallszahl *r*',
wobei das Erzeugen des privaten Schlüssels *X* durch das sichere Mehrparteienrechnen umfasst:
Erhalten von Zwischenfragmenten *x1*' bis *xn*', wobei ein Zwischenfragment *xi*' durch den Blockchain-Knoten *Bi* durch Wiederherstellen von privaten Schlüsselfragmenten *x1_i* bis *xn_i* unter Verwendung eines Geheimnisteilungsalgorithmus erhalten wird, wobei private Schlüsselfragmente *xi_1* bis *xi_n* durch den Blockchain-Knoten *Bi* durch Fragmentieren eines privaten Knotenschlüssels *xi* unter Verwendung des Geheimnisteilungsalgorithmus erhalten werden, *xi_j* durch den Blockchain-Knoten *Bi* mit einem Blockchain-Knoten *Bj* geteilt wird und *j*∈[1, *i*-1]∪ [*i*+*1, n*] und *j* eine positive ganze Zahl ist; und
Erhalten des privaten Schlüssels *X* durch Wiederherstellen der Zwischenfragmente *x1*' bis *xn*' unter Verwendung des Geheimnisteilungsalgorithmus.

2. Verfahren nach Anspruch 1, wobei das Ausführen (204) eines Smart Contract, der eine Zufallszahl erzeugt, umfasst:
Ausführen des Smart Contract, der die Zufallszahl erzeugt, in einer vertrauenswürdigen Ausführungsumgebung, die auf dem Blockchain-Knoten Bi eingesetzt wird.

3. Verfahren nach Anspruch 1, wobei der Smart Contract ferner verwendet wird, um den erzeugten privaten Schlüssel *X* zu löschen, wenn die Zielzufallszahl r' bestimmt wird.

4. Verfahren nach Anspruch 1, wobei der öffentliche Schlüssel *H* ein Produkt der öffentlichen Knotenschlüssel *h1* bis *hn* ist, der private Schlüssel *X* eine Summe der privaten Knotenschlüssel *x1* bis *xn* ist und *hi*=*g*^*xi* ist, wenn der Hash-Wert unter Verwendung einer Formel *g*^*a*^{∗}*H*^*b* berechnet wird, wobei g ein vorbestimmter Generator ist; und a=m und b=r oder a=m' und b=r'.

5. Verfahren nach Anspruch 1, ferner umfassend:
Bestimmen, durch den Blockchain-Knoten *Bi,* eines Transaktionsinitiators der Blockbearbeitungstransaktion; und
Aktualisieren, durch den Blockchain-Knoten *Bi,* des ursprünglichen Blockinhalts *m* des Blocks *Qi* basierend auf der Blockbearbeitungstransaktion, wenn der Transaktionsinitiator eine Bearbeitungserlaubnis für den Block *Qi* hat.

6. Verfahren nach Anspruch 1, ferner umfassend:
Bestimmen, durch den Blockchain-Knoten *Bi,* eines öffentlichen Knotenschlüssels *hi,* der für den Block *Qi* in einem Prozess des Erzeugens des Blocks *Qi+1* verwendet wird;
Senden, durch den Blockchain-Knoten *Bi,* des bestimmten öffentlichen Knotenschlüssels *hi* an die anderen Blockchain-Knoten und Empfangen öffentlicher Knotenschlüssel, die für den Block *Qi* verwendet werden, die durch die anderen Blockchain-Knoten bestimmt werden, um die öffentlichen Knotenschlüssel *h1* bis *hn* zu erhalten; und
Erzeugen, durch den Blockchain-Knoten *Bi,* des übergeordneten Hashs basierend auf dem öffentlichen Schlüssel *H*, der den öffentlichen Knotenschlüsseln *h1* bis *hn* entspricht, und Hinzufügen des übergeordneten Hashs zu dem Block-Header des Blocks *Qi*+1*.*

7. Verfahren nach Anspruch 1, wobei
der Blockchain-Knoten *Bi* ein selbes öffentlich-privates Schlüsselpaar für verschiedene Blöcke verwendet; oder
wenn der Blockchain-Knoten *Bi* verschiedene öffentlich-private Schlüsselpaare für mindestens zwei Blöcke verwendet, das Verfahren ferner umfasst: Aufzeichnen, durch den Blockchain-Knoten *Bi,* einer Abbildungsbeziehung zwischen jedem Block und einem entsprechend verwendeten öffentlich-privaten Schlüsselpaar, um den ursprünglichen Blockinhalt m des Blocks *Qi* basierend auf der Abbildungsbeziehung zu bearbeiten.

8. Blockinhaltsbearbeitungsvorrichtung, umfassend:
eine Empfangseinheit (61), die eingerichtet ist, einen Blockchain-Knoten *Bi* in die Lage zu versetzen, eine Blockbearbeitungstransaktion zu empfangen, die verwendet wird, um ursprünglichen Blockinhalt *m* eines Blocks *Qi* auf Zielblockinhalt *m*' zu bearbeiten, wobei ein übergeordneter Hash, der dem Block *Qi* entspricht, in einem Block-Header eines Blocks *Qi*+1 aufgezeichnet wird, der übergeordnete Hash durch Berechnung unter Verwendung des ursprünglichen Blockinhalts *m,* eines öffentlichen Schlüssels *H* und einer ursprünglichen Zufallszahl *r* erzeugt wird, der öffentliche Schlüssel *H* durch Berechnung unter Verwendung von öffentlichen Knotenschlüsseln *h1* bis *hn* erzeugt wird, die jeweils Blockchain-Knoten *B1* bis *Bn* entsprechen, und *i* ∈ [1, *n*] und *i* eine positive ganze Zahl ist;
eine Ausführungseinheit (62), die eingerichtet ist, den Blockchain-Knoten *Bi* in die Lage zu versetzen, einen Smart Contract auszuführen, der eine Zufallszahl erzeugt, wenn bestimmt wird, dass ein Konsens über die Blockbearbeitungstransaktion erfolgreich ist, wobei der Smart Contract verwendet wird, um sicheres Mehrparteienrechnen in Bezug auf private Knotenschlüssel *x1* bis *xn* auszuführen, die jeweils den Blockchain-Knoten *B1* bis *Bn* entsprechen, um einen privaten Schlüssel *X* zu erzeugen; und die entsprechende Zielzufallszahl *r'* basierend auf dem ursprünglichen Blockinhalt *m,* dem Zielblockinhalt *m',* der ursprünglichen Zufallszahl *r* und dem privaten Schlüssel *X* zu bestimmen, wobei ein Hash-Wert, der durch Berechnung unter Verwendung des Zielblockinhalts *m',* des öffentlichen Schlüssels *H* und der Zielzufallszahl *r'* erzeugt wird, derselbe wie der übergeordnete Hash ist; und
eine Aktualisierungseinheit (63), die eingerichtet ist, den Blockchain-Knoten *Bi* in die Lage zu versetzen, den ursprünglichen Blockinhalt *m* auf den Zielblockinhalt *m*' und die ursprüngliche Zufallszahl r auf die Zielzufallszahl *r'* zu aktualisieren,
wobei die Ausführungseinheit (62) den privaten Schlüssel *X* durch das sichere Mehrparteienrechnen erzeugt durch:
Erhalten von Zwischenfragmenten *x1*' bis *xn*', wobei ein Zwischenfragment *xi*' durch den Blockchain-Knoten *Bi* durch Wiederherstellen von privaten Schlüsselfragmenten *x1_i* bis *xn_i* unter Verwendung eines Geheimnisteilungsalgorithmus erhalten wird, wobei private Schlüsselfragmente *xi_1* bis *xi_n* durch den Blockchain-Knoten *Bi* durch Fragmentieren eines privaten Knotenschlüssels *xi* unter Verwendung des Geheimnisteilungsalgorithmus erhalten werden, *xi_j* durch den Blockchain-Knoten *Bi* mit einem Blockchain-Knoten *Bj* geteilt wird und *j*∈[1, *i*-1]∪[*i*+1, *n*] und *j* eine positive ganze Zahl ist; und
Erhalten des privaten Schlüssels *X* durch Wiederherstellen der Zwischenfragmente *x1*' bis *xn*' unter Verwendung des Geheimnisteilungsalgorithmus.

9. Blockchain-Knoten, umfassend:
mindestens einen Prozessor; und
mindestens einen Speicher, der eingerichtet ist, einen prozessorausführbaren Befehl zu speichern, wobei
der mindestens eine Prozessor das Verfahren nach einem der Ansprüche 1 bis 7 durch Ausführen des prozessorausführbaren Befehls implementiert.

10. Computerlesbares Speichermedium, das einen Computerbefehl speichert, wobei der Schritt des Verfahrens nach einem der Ansprüche 1 bis 7 implementiert wird, wenn der Computerbefehl durch mindestens einen Prozessor ausgeführt wird.

## Revendications

1. Procédé d'édition de contenu de bloc, comprenant :
la réception (202), par un noeud de chaîne de blocs *Bi,* d'une transaction d'édition de bloc, qui est utilisée pour éditer un contenu de bloc original *m* d'un bloc *Qi* en un contenu de bloc cible *m',* dans lequel un hachage parent correspondant au bloc *Qi* est enregistré dans un en-tête de bloc d'un bloc *Qi*+*1*, le hachage parent est généré par calcul en utilisant un contenu de bloc original *m,* une clé publique *H* et un nombre aléatoire original *r*, la clé publique *H* est générée par calcul en utilisant des clés publiques de noeud *h1* à *hn* correspondant respectivement à des noeuds de chaîne de blocs *B1* à *Bn,* et *i* E [1, *n*] et *i* est un entier positif ;
l'exécution (204), par le noeud de chaîne de blocs *Bi,* d'un contrat intelligent qui génère un nombre aléatoire lors de la détermination qu'un consensus sur la transaction d'édition de bloc réussit, dans lequel le contrat intelligent est utilisé pour exécuter un calcul sécurisé multipartite lié à des clés privées de noeud *x1* à *xn* correspondant respectivement aux noeuds de chaîne de blocs *B1* à *Bn* pour générer une clé privée *X* ; et la détermination d'un nombre aléatoire cible correspondant *r'* sur la base du contenu de bloc original *m,* du contenu de bloc cible *m',* du nombre aléatoire original *r* et de la clé privée *X,* dans lequel une valeur de hachage générée par calcul en utilisant le contenu de bloc cible *m'*, la clé publique *H* et le nombre aléatoire cible *r'* est la même que le hachage parent ; et
la mise à jour (206), par le noeud de chaîne de blocs *Bi,* du contenu de bloc original *m* au contenu de bloc cible *m'* et du nombre aléatoire original *r* au nombre aléatoire cible *r'*,
dans lequel la génération de la clé privée *X* par l'intermédiaire du calcul sécurisé multipartite comprend :
l'obtention de fragments intermédiaires *x1'* à *xn',* dans lequel un fragment intermédiaire *xi'* est obtenu par le noeud de chaîne de blocs *Bi* par récupération de fragments de clé privée *x1_i* à *xn_i* en utilisant un algorithme de partage de secret, dans lequel des fragments de clé privée *xi*_*1* à *xi_n* sont obtenus par le noeud de chaîne de blocs *Bi* par fragmentation d'une clé privée de noeud *xi* en utilisant l'algorithme de partage de secret, *xi_j* est partagé par le noeud de chaîne de blocs *Bi* avec un noeud de chaîne de blocs *Bj,* et *j* ∈ [1, *i*-1] ∪ [*i*+1*, n*] et *j* est un entier positif ; et
l'obtention de la clé privée *X* par récupération des fragments intermédiaires *x1'* à *xn'* en utilisant l'algorithme de partage de secret.

2. Procédé selon la revendication 1, dans lequel l'exécution (204) d'un contrat intelligent qui génère un nombre aléatoire comprend :
l'exécution du contrat intelligent qui génère le nombre aléatoire dans un environnement d'exécution de confiance déployé sur le noeud de chaîne de blocs *Bi.*

3. Procédé selon la revendication 1, dans lequel le contrat intelligent est en outre utilisé pour supprimer la clé privée *X* générée lorsque le nombre aléatoire cible *r'* est déterminé.

4. Procédé selon la revendication 1, dans lequel la clé publique *H* est un produit des clés publiques de noeud *h1* à *hn,* la clé privée *X* est une somme des clés privées de noeud *x1* à *xn,* et *hi*=*g*^*xi* lorsque la valeur de hachage est calculée en utilisant une formule *g*^*a*^{∗}*H*^*b,* dans laquelle
g est un générateur prédéterminé ; et *a*=*m* et *b*=*r,* ou *a*=*m'* et *b*=*r'.*

5. Procédé selon la revendication 1, comprenant en outre :
la détermination, par le noeud de chaîne de blocs *Bi,* d'un initiateur de transaction de la transaction d'édition de bloc ; et
la mise à jour, par le noeud de chaîne de blocs *Bi,* du contenu de bloc original *m* du bloc *Qi* sur la base de la transaction d'édition de bloc lorsque l'initiateur de transaction a une permission d'édition pour le bloc *Qi.*

6. Procédé selon la revendication 1, comprenant en outre :
la détermination, par le noeud de chaîne de blocs *Bi,* d'une clé publique de noeud *hi* utilisée pour le bloc *Qi* dans un processus de génération du bloc *Qi+1* ;
l'envoi, par le noeud de chaîne de blocs *Bi,* de la clé publique de noeud déterminée *hi* aux autres noeuds de chaîne de blocs, et la réception de clés publiques de noeud utilisées pour le bloc *Qi* qui sont déterminées par les autres noeuds de chaîne de blocs, pour obtenir les clés publiques de noeud *h1* à *hn* ; et
la génération, par le noeud de chaîne de blocs *Bi,* du hachage parent sur la base de la clé publique *H* correspondant aux clés publiques de noeud *h1* à *hn,* et l'ajout du hachage parent à l'en-tête de bloc du bloc *Qi+1.*

7. Procédé selon la revendication 1, dans lequel
le noeud de chaîne de blocs *Bi* utilise une même paire de clés publique-privée pour différents blocs ; ou
lorsque le noeud de chaîne de blocs *Bi* utilise différentes paires de clés publique-privée pour au moins deux blocs, le procédé comprend en outre :
l'enregistrement, par le noeud de chaîne de blocs *Bi,* d'une relation de mappage entre chaque bloc et une paire de clés publique-privée utilisée de manière correspondante pour éditer le contenu de bloc original *m* du bloc *Qi* sur la base de la relation de mappage.

8. Appareil d'édition de contenu de bloc, comprenant :
une unité de réception (61), configurée pour permettre à un noeud de chaîne de blocs *Bi* de recevoir une transaction d'édition de bloc, qui est utilisée pour éditer un contenu de bloc original *m* d'un bloc *Qi* en un contenu de bloc cible *m',* dans lequel un hachage parent correspondant au bloc *Qi* est enregistré dans un en-tête de bloc d'un bloc *Qi*+*1,* le hachage parent est généré par calcul en utilisant le contenu de bloc original *m,* une clé publique *H* et un nombre aléatoire original *r*, la clé publique *H* est générée par calcul en utilisant des clés publiques de noeud *h1* à *hn* correspondant respectivement à des noeuds de chaîne de blocs *B1* à *Bn,* et *i* ∈ [1, *n*] et *i* est un entier positif ;
une unité d'exécution (62), configurée pour permettre au noeud de chaîne de blocs *Bi* d'exécuter un contrat intelligent qui génère un nombre aléatoire lorsqu'il est déterminé qu'un consensus sur la transaction d'édition de bloc réussit, dans lequel le contrat intelligent est utilisé pour exécuter un calcul sécurisé multipartite lié à des clés privées de noeud *x1* à *xn* correspondant respectivement aux noeuds de chaîne de blocs *B1* à *Bn* pour générer une clé privée *X;* et déterminer un nombre aléatoire cible correspondant *r'* sur la base du contenu de bloc original *m,* du contenu de bloc cible *m',* du nombre aléatoire original *r* et de la clé privée *X*, dans lequel une valeur de hachage générée par calcul en utilisant le contenu de bloc cible *m',* la clé publique *H* et le nombre aléatoire cible *r'* est la même que le hachage parent ; et
une unité de mise à jour (63), configurée pour permettre au noeud de chaîne de blocs *Bi* de mettre à jour le contenu de bloc original *m* au contenu de bloc cible *m'* et le nombre aléatoire original *r* au nombre aléatoire cible *r'*,
dans lequel l'unité d'exécution (62) génère la clé privée *X* par l'intermédiaire du calcul sécurisé multipartite par :
l'obtention de fragments intermédiaires *x1'* à *xn',* dans lequel un fragment intermédiaire *xi'* est obtenu par le noeud de chaîne de blocs *Bi* par récupération de fragments de clé privée *x1_i* à *xn i* en utilisant un algorithme de partage de secret, dans lequel des fragments de clé privée *xi*_*1* à *xi_n* sont obtenus par le noeud de chaîne de blocs *Bi* par fragmentation d'une clé privée de noeud *xi* en utilisant l'algorithme de partage de secret, *xi_j* est partagé par le noeud de chaîne de blocs *Bi* avec un noeud de chaîne de blocs *Bj,* et *j* ∈ [1, *i*-1] ∪ [*i*+1*, n*] et *j* est un entier positif ; et
l'obtention de la clé privée *X* par récupération des fragments intermédiaires *x1'* à *xn*' en utilisant l'algorithme de partage de secret.

9. Noeud de chaîne de blocs, comprenant :
au moins un processeur ; et
au moins une mémoire configurée pour stocker une instruction exécutable par processeur, dans lequel
l'au moins un processeur met en oeuvre le procédé selon l'une quelconque des revendications 1 à 7 par exécution de l'instruction exécutable par processeur.

10. Support de stockage lisible par ordinateur, stockant une instruction informatique, dans lequel l'étape du procédé selon l'une quelconque des revendications 1 à 7 est mise en oeuvre lorsque l'instruction informatique est exécutée par au moins un processeur.
